# EUROPEAN PATENT SPECIFICATION

(11) **EP 3 847 388 B1**
(45) Date of publication and mention of the grant of the patent: **22.02.2023**
(21) Application number: 19783148.0
(22) Date of filing: 03.09.2019
(51) Int. Cl.: F16K 3/34, F16K 1/12, F16K 31/524, F16K 3/24, F16K 47/08, F16K 31/122

(54) **AXIAL FLOW CONTROL VALVE**
AXIALSTROMREGELVENTIL
SOUPAPE DE RÉGULATION DE DÉBIT AXIAL

(30) Priority: 03.09.2018 NL 2021549
(43) Date of publication of application: 14.07.2021
(73) Proprietor: Control Seal VME B.V., 9902 BL Appingedam (NL)
(72) Inventor: DANA, Jaroslav, 9902 BL Appingedam (NL)
(74) Representative: V.O.
(86) International application number: PCT/NL2019/050570
(87) International publication number: WO 2020/050718

(56) References cited:
- DE-U- 7 102 567
- US-A- 3 654 950
- US-A- 4 966 067
- US-A1- 2004 183 044

## Description

### FIELD AND BACKGROUND OF THE INVENTION

The invention relates to a valve according to the introductory portion of claim 1. Such a valve is known from US 3 654 950.

Axial flow valves have been adopted throughout the hydrocarbon industry in critical, high integrity and severe service applications. They are best suited to applications where minimal downstream turbulence, low fixed pressure drop, rapid closure, accuracy of control and reliability are important. Axial flow valves can be fully pressure balanced, meaning that the only significant forces resisting valve operation are seal and mechanical friction between the gear system components.

In fields of use such as oil and gas production, process industries, transport, distribution and storage of fluids, valves are used for precise control of pressure, flow or temperature, for instance as a choke (Joule Thompson) valve or as a surge relief valve. Flow of fluids of a wide range may need to be controlled, such as oil products from crude oil to refined products, high gas-oil multiphase fluids, natural gas (which may contain contaminants such as sand).

In view of pressures at which such valves need to operate (pressure classes: 150# ~ 2500#) and operating temperatures from as low as about - 195°C to more than 500 °C, the valves need to be of a very robust construction with a high thermal stress resistance of structural parts, actuating mechanisms and seals. Also, because of the use in large scale process installations, minimal maintenance and in particular costly downtime should be as brief and infrequent as possible.

Most axial flow valves incorporate linear actuation in order to position the obturator. The most widely adopted linear mechanism available to the market makes use of a 45°, 1:1 sliding rack to convert actuator linear motion to linear motion of the obturator sheath in order to open and close the valve. Examples of such valves are disclosed in US 4 327 757, WO2007/048942, WO2008/098702 and WO2015/049525.

As with many sliding gear mechanisms, there are high frictional forces encountered when moving under load. These forces result in a low efficiency rating, thereby increasing the actuation forces required to operate the valve reliably.

There are further inherent weaknesses with this type of mechanism. With enough cycling under load, it will fail due to galling and eventual seizure, particularly in conditions where there is limited or no lubrication. The friction and wear of the gear teeth and sliding bearing areas will result in degradation of these surfaces, eventually abrading away hardened surface treatments.

WO2017/055856 discloses a valve in which linear displacement of a toothed rack actuator perpendicular to an axial direction, in which the flow control obturator sheath is movable, is converted into axial displacement of a toothed rack connected to the flow control sheath by means of a pinion engaging both toothed racks. In such a valve, a galling failure mode is much less likely to cause the gear train to seize and, as a rolling motion gear system, it has low frictional losses, reducing the actuation forces necessary to operate the valve. Nevertheless, also such an actuating system is sensitive to good lubrication and wear resistance of the teeth is a problem causing failures of the valve, while also strength of the teeth is often a problem.

WO2007/048942 discloses a valve in which linear displacement of an actuator perpendicular to an axial direction, in which the flow control obturator sheath is movable, is converted into axial displacement of a plunger connected to the flow control sheath by means of a crank wheel, a connecting rod between the actuator and the crank wheel and a connecting rod between the crank wheel and the plunger. Such an actuating system occupies a relatively large amount of space, is complicated, costly and the relatively small hinged linkages are not robust.

WO2007/048942, WO2009/143028 and WO2015/049525 disclose axial flow valves in which axial movement of the obturator sheath is driven by rotation of an actuator shaft about a centre line perpendicular to the axial direction. A pinion mounted to the actuator shaft engages a toothed rack oriented in the axial direction. Also in such valves, the actuating system is sensitive to good lubrication and wear resistance of the teeth is a problem causing failures of the valve, while also strength of the teeth is often a problem.

Also US 3 654 950 and DE10 2016 101 664 disclose axial flow valves in which axial movement of the obturator sheath is driven by rotation of an actuator shaft about a centre line perpendicular to the axial direction. In these valves, a toggle mechanism including an actuator shaft and a toggle arm coupled to a plunger either via dogs engaging recesses in the plunger or, respectively, via a connecting rod between an end of the toggle arm and the plunger. In such actuating systems, the relatively small hinged linkages or dogs are not robust and the envelope of movement of the connecting rod requires a relatively large free space inside the valve.

US2004/0183044 discloses a valve actuation mechanism including a valve shaft having a cam disposed at one end thereof. The cam is attached to the valve shaft in an off-center/eccentric manner relative to an axis of rotation of the valve shaft. Rotation of the valve shaft causes rotation of the cam within a slot, which in turn causes the movement of a valve sleeve. In effect, the rotation of the valve shaft causes a point on a perimeter of the cam to trace a circle.

US4,966,067 relates to a mechanism for converting linear displacement of a piston to angular displacement of a shaft.

### SUMMARY OF THE INVENTION

It is an object of the present invention to provide an axial flow control valve that is extremely simple and robust yet easy to operate and allows accurate flow control and a compact construction without compromising low flow resistance. According to the invention, this object is achieved by providing a valve according to claim 1.

Because the mutually contiguous first and second surface portions of the actuating surface of the toggle member at mutually different distances from the pivot axis of the toggle member have mutually different radii of curvature about axes of curvature parallel to the pivot axis, axial displacement of the obturator sheath per unit of angular rotation of the toggle member can be adapted to suit both precision of control requirements and requirements regarding maximum forces for actuating movement of the obturator sheath. Furthermore, the valve can be arranged for pivoting of the toggle member over a larger angular range without increasing variation in the amount of displacement of the obturator sheath per unit of angular rotation of the toggle member, so that a smaller toggle member can be used. In turn, this allows the bulb to be smaller, so that a compact construction can be provided at a given flow resistance.

In a particular embodiment, the motion transfer mechanism of the valve is particularly compact, because the toggle member is in the form of an elongated crank arm pivotable about the pivot axis, the at least one actuating surface is located on the crank arm such that in longitudinal direction of the crank arm, the at least one actuating surface is located spaced from the pivot axis only, the at least one engagement surface is arranged to move along a path in the axial direction, contours of the path being defined by boundaries of the at least one engagement surface, and, in the direction perpendicular to the axial direction and to the pivot axis, the pivot axis is located spaced from the path. This allows the toggle member to be particularly small, while nevertheless the obturator sheath can be moved over a substantial stroke length between the closed and the open position. Also the construction is robust and easy to assemble, because a shaft to which the toggle member is mounted can extend aside of the operating member coupled to the obturator sheath, without requiring a slot or large cut-out in said operating member.

Further particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a cross-sectional perspective view of an example of a valve according to the invention;
Fig. 2 is a cross-sectional top view of the valve shown in Fig. 1 in a maximally open condition; and
Fig. 3 is a cross-sectional top view of the valve shown in Figs. 1 and 2 in a maximally closed condition.

### DETAILED DESCRIPTION

In the drawings, a valve 1 for controlling a flow of fluid through tubing attached to flanges 3, 4 of a valve housing 2 is shown. A flow channel 5 extends through the housing 2 from a first end 6 in an axial direction 8 to a second end 7. The flow channel 5 has a first flow channel section 9 extending into the valve 1 from the first end 6 and a second flow channel section 10 extending into the valve 1 from the second end 7. The valve 1 can be mounted for flow through the valve 1 from the first end 6 to the second end 7 and/or from the second end 7 to the first end 6.

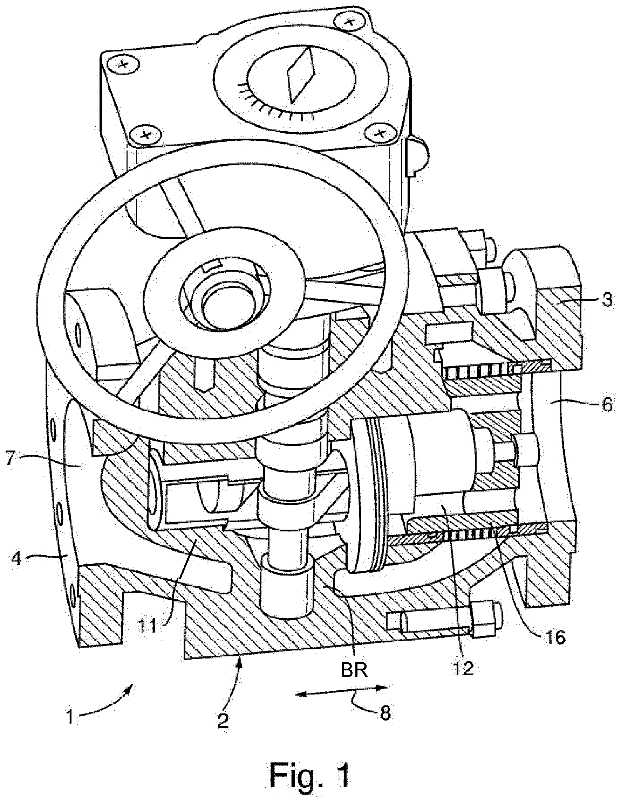

A bulb 11 is suspended in the second flow channel section 10 via a bridge BR (see Fig. 1) connecting the bulb 11 to the housing 2. The second flow channel section 10 extends along the bulb 11 radially outside of the bulb 11 over the full circumference of the bulb 11, except where the bridge BR is located. Instead of the single bridge BR, two or more bridges may be provided. Depending on requirements and functions of the bridges, the bridges may be of mutually equal or different shapes and/or dimensions. The first flow channel section 9 extending axially from the first end 6 towards the bulb 11.

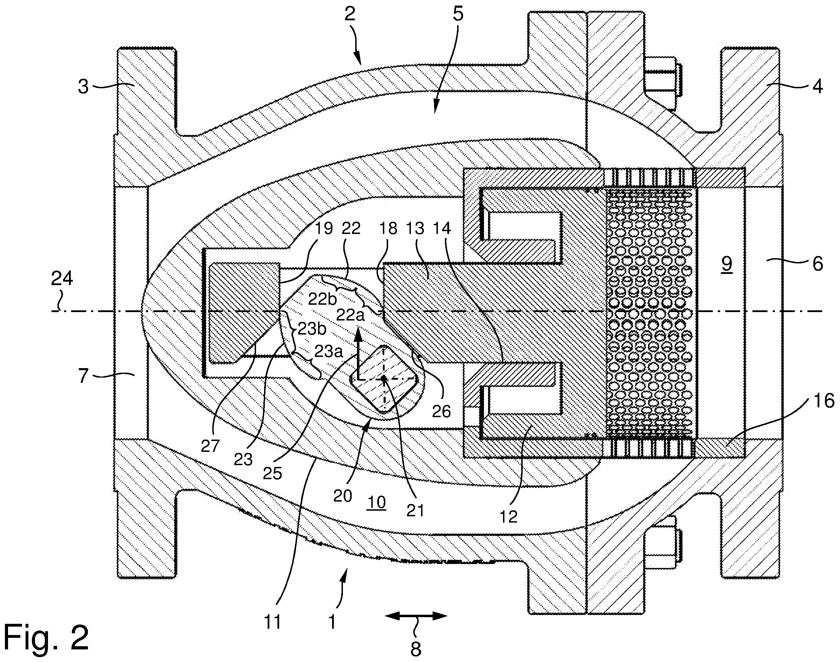

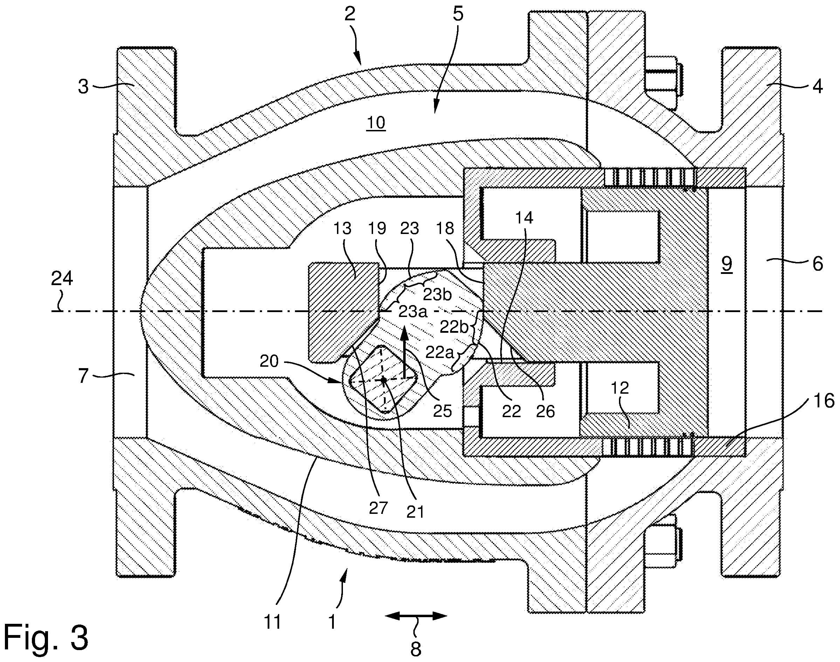

An obturator sheath 12 is suspended for guided axial movement between an open position (Fig. 2) and a closed position (Fig. 3). In this example, the obturator sheath 12 is guided in the first flow channel section 9 and, via an operating member 13 extending axially in the bulb 11 and connected to the obturator sheath 12, the obturator sheath 12 is guided relative to a guide opening 14 in the bulb 11.

In the closed position, the obturator sheath 12 closes off flow passages 15 (not all designated by a reference number) between the first flow channel section 9 radially inside the flow passages 15 and the second flow channel section radially outward of the flow passages 15, substantially (i.e. apart from some leakage if allowable in the application at hand) blocking flow from the first flow channel section 9 to the second flow channel section 10 and vice versa.

In this example, the flow passages 15 are formed by a pattern of openings in a cylinder liner 16 of which an inner surface 17 is about flush with an inner wall surface of the first end 6 of the flow path 5. However other embodiments are also possible, for instance having a single flow passage, for instance formed by an end of the second flow channel section at a path of the guided movement of the obturator sheath and/or without a cylinder liner.

The obturator sheath 12 in the open position at least partially leaves open the flow passages 15 between the first flow channel section 9 and the second flow channel section 10, allowing flow from the first flow channel section 9 to the second flow channel section 10 and vice versa. Depending on the application, the obturator sheath 12 in the fully open position and/or the openings 15 may to some extent restrict flow through the flow channel 5 of the valve 1.

The operating member 13 has engagement surfaces 18, 19 facing in opposite axial directions 8. A toggle member 20 is pivotably mounted to the bulb 11 so as to be pivotable about a pivot axis 21 between a closing position (Fig. 3) causing the obturator sheath 12 to be in the closed position and an opening position (Fig. 2) causing the obturator sheath 12 to be in the open position. The toggle member 20 has actuating surfaces 22, 23, each in contact with a respective one of the engagement surfaces 18, 19 in a position in a plane spaced from the pivot axis 21 in a direction 25 perpendicular to the axial direction 8 and to the pivot axis 21. In this example, the plane 24 extends through a central axis 24 of the flow channel 5 and the bulb 11, but this plane may also be located further away from or closer to the pivot axis 21. Also, the plane in which the actuating surfaces contact the engagement surfaces may be essentially stationary, as in the present example, or move towards and away from the pivot axis as the toggle member is pivoted.

Furthermore, in this example two pairs of actuating and engagement surfaces 22, 18 and 23, 19 are provided. It is however also possible to provide a single pair of actuating an engagement surfaces in mutual contact for urging the operating member and the obturator sheath in one axial direction only, while movement in the opposite axial direction may for instance be driven by a spring or by a fluid pressure such as pressure of a liquid of which the flow is controlled.

The actuating surfaces have first and second surface portions 22a, 23a; 22b, 23b at mutually different distances from the pivot axis 21 and contiguous to each other. These first and second surface portions 22a, 23a; 22b, 23b have mutually different radii of curvature about axes of curvature parallel to the pivot axis 21.

As can be seen from Figs. 2 and 3, if the toggle member 20 is in the opening position (Fig. 2), the first surface portion 22a of the actuating surface 22 is in contact with the engagement surface 18, while as the toggle member 20 has pivoted to the closed position (Fig. 3) the actuating surface 22 has sled along the engagement surface so that the second surface portion 22b then contacts the engagement surface 18. Since the first surface portion 22a of the actuating surface 22, where the actuating surface 22 touches the engagement surface 18 when the toggle member 20 is in the opening position, has a smaller (average) radius of curvature than the (average) radius of curvature of the second surface portion 22b, where the actuating surface 22 touches the engagement surface 18 when the toggle member 20 is in the closing position, when the toggle member 20 pivots from the opening position to the closing position, at least initially, the displacement of the sheath 16 per unit of rotation of the toggle member 20 about the pivot axis is less than for a toggle member having one radius of curvature between the radii of curvature of the first and second surface portions 22a and 22b. Then, after the toggle member 20 has pivoted to an orientation about perpendicular to the axis 24 of the valve 1, the second surface portion 22b of the actuating surface 22 contacts the engagement surface 18. Because of the larger curvature of the second surface portion 22b, at least ultimately, the displacement of the sheath 16 per unit of rotation of the toggle member 20 about the pivot axis 21 is larger than for a toggle member having one radius of curvature between the radii of curvature of the first and second surface portions 22a and 22b.

Thus, the radii of curvature of the actuating surface portions 22a and 22b are dimensioned such that the ratio between an angular rotation of the toggle member 20 and axial displacement of the obturator sheath 12 is at least more constant than if the actuating surface has a single radius of curvature about axes of curvature parallel to the pivot axis.

In the present example, the toggle member 20 is in the form of an elongated crank arm pivotable about the pivot axis 21. The actuating surfaces 22, 23 are located on the crank arm such that in longitudinal direction of the crank arm, the actuating surfaces 22, 23 are located spaced from the pivot axis 21 only. The engagement surfaces 18, 19 are arranged to move along a path in the axial direction, contours of the path being defined by boundaries of the engagement surfaces 18, 19, In the direction 25 perpendicular to the axial direction and to the pivot axis 21, the pivot axis 21 is located spaced form the path. This allows the toggle member 20 to be particularly small, while nevertheless the obturator sheath 12 can be moved over a substantial stroke length between the closed and the open position. Thus the construction for operating the valve 2 can be of a particularly compact construction so that the bulb 11 can be of a compact design requiring little deviation in the flow path through the valve. Also the construction is robust and easy to assemble, because a shaft to which the toggle member 20 is mounted can extend aside of the operating member 13 coupled to the obturator sheath 12, without requiring a slot or large cut-out in the operating member 13.

For achieving a constant ratio between the angular rotation of the toggle member 20 and the axial displacement of the obturator sheath 12, it is advantageous if, as in the present example, the first surface portion 22a, which is closer to the pivot axis 21 than the second surface portion 22b has a smaller radius of curvature about an axis of curvature parallel to the pivot axis 21 than the second surface portion 22b. Where the actuating surface 22 passes from the first surface portion 22a to the second surface portions 22b, the orientation of the actuating surface 22 does not change abruptly, so that a smooth transition of movement of the obturator sheath 12 is obtained when the second surface portion 22b contacts the engagement surface 18 after the first surface portion 22a has passed along the engagement surface 18 and vice versa.

Depending on requirements, the radii of curvature of consecutive surface portions can be adapted to provide increased precision of control, reduced maximum forces for actuating movement of the obturator sheath or quick movement of the obturator sheath in a particular range. Furthermore, the valve 1 can be arranged for pivoting of the toggle member 20 over a larger angular range without increasing variation in the amount of displacement of the obturator sheath 12 per unit of angular rotation of the toggle member 20, so that a small toggle member 20 can be used. In turn, this allows the bulb 11 to be small, so that a more compact construction can be provided at a given flow resistance.

For a particularly uniform constant ratio between the angular rotation of the toggle member 20 and the axial displacement of the obturator sheath 12, it is advantageous if, as in the present example, the radii of curvature of a sequence of the actuating surface portions that contact the engagement surface 18 increase continuously with increasing distance from the pivot axis 21.

In the present example, the actuating surface 22 is shaped as an involute of a circle of which the centre is intersected by the pivot axis 21 (i.e. each point on the actuating surface curve is perpendicular to a tangent of the circle on a side of the actuating surface 22 opposite of the direction in which the actuating surface 22 is facing). Thus, a fully constant ratio between the angular rotation of the toggle member 20 and the axial displacement of the obturator sheath 12 is achieved,

The circle of which actuating surface 22 is shaped as an involute curve has a radius equal to the distance from the pivot axis 21 to the path of contact between the actuating surface 22 and the engagement surface 18, which path extends along the central axis 24 of the flow channel 5 and the bulb 11 and the engagement surface 18 is oriented perpendicular to this central axis 24. Accordingly, the actuating surface 22 and the engagement surface 18, always contact along the central axis 24 of the flow channel 5 and the bulb 11 and are oriented perpendicular to the direction of movability 8 of the obturator sheath 12 at the point of contact. Thus, transverse reaction forces are minimized. Because the actuating surface 22 touches the engagement surface 18 in a fixed central contact position on the engagement surface 18 as the toggle member 20 is pivoted, it is avoided that a tilting moment is exerted onto the obturator sheath 12, so that friction and wear are limited.

Because the fixed contact position on the engagement surface 18 is intersected by the central axis 24 of the obturator sheath 12, exertion of a tilting moment onto the obturator sheath 12 is also reduced in absolute sense.

The toggle member 20 has actuating surfaces 22, 23 on mutually opposite sides, which actuating surfaces 22, 23 each contact an associated one of mutually opposite engagement surfaces 18, 19 facing each other. Thus, movement of the obturator sheath 12 in opening and closing directions is directly controlled by the pivoting position of the toggle member 20.

In each operative position of the toggle member 20 a section of the crank arm extends from the pivot axis 21 towards the actuating surfaces 22, 23 in an area outside of a space between the opposite engagement surfaces 18, 19. This allows the opposite actuating surfaces 22, 23 to be relatively close together and the toggle member 20 to be small in directions perpendicular to its longitudinal direction, which also allows the engagement surfaces 18, 19 to be close together. This further contributes to a compact design of the motion transfer mechanism of the valve.

The actuating surfaces 22, 23 on mutually opposite sides of the toggle member 20 are shaped such that positions in which the actuating surfaces 22, 23 contact the engagement surfaces 18 and, respectively, 19 remain at a constant distance in the axial direction 8 if the toggle member 20 is pivoted in an operating range in which the actuating surfaces 22, 23 remain in contact with the engagement surfaces 18 and, respectively, 19. Thus, the position in opening and closing directions 8 of the obturator sheath 12 is controlled accurately by the pivoting position of the toggle member 20, without leaving a significant amount of play in opening and closing directions 8. Also the opposite actuating surface is preferably shaped as an involute curve.

In the present example, also the curvature of the actuating surface 23 facing in opening direction is shaped as an involute curve of a circle of which a centre is intersected by the pivot axis 21 (i.e. each point on the actuating surface curve is perpendicular to a tangent of the circle on a side of the actuating surface 23 opposite of the direction in which the actuating surface 23 is facing). Thus, a fully constant ratio between the angular rotation of the toggle member 20 and the axial displacement of the obturator sheath 12 is also achieved in opening direction,

Also the circle of which actuating surface 22 is shaped as an involute curve has a radius equal to the distance from the pivot axis 21 to the path of contact between the actuating surface 23 and the engagement surface 19, so that also, the actuating surface 23 and the engagement surface 19, always contact in positions along the central axis 24 of the flow channel 5 and the bulb 11 and are oriented perpendicular to the direction of movability 8 of the obturator sheath 12 at the point of contact.

Since actuating surfaces 22, 23 are opposite involutes of the same circle, positions in which the actuating surfaces 22, 23 contact the engagement surfaces 18 and, respectively, 19 remain at a constant distance in the axial direction 8 if the toggle member 20 is pivoted in an operating range in which the actuating surfaces 22, 23 remain in contact with the engagement surfaces 18 and, respectively, 19.

For a rigid and strong yet compact construction, it is moreover advantageous that the actuating surfaces 22, 23 are on sides of a body of the toggle member 20 extending from the pivot axis 21 and more in particular that the toggle member 20 is integrally formed.

The operating member 13 further has at least chamfer surfaces 26, 27 contiguous with the engagement surfaces 18, 19. This allows the pivot axis 21 to be particularly close to the axis 24 of the obturator sheath 12 and the operating member 13 and allows the toggle member 20 to be pivoted over a large angular range. This in turn allows a compact construction of the bulb 11.

For an efficient construction, the engagement surfaces 18, 19 are flat and oriented perpendicular to the central axis of the obturator sheath 12.

## Claims

1. A valve for controlling a flow of fluid, the valve having:
a housing (2) with a flow channel (5) extending through the housing (2) from a first end (6) in an axial direction (8) to a second end (7), the flow channel (5) having a first flow channel section (9) extending into the valve (1) from the first end (6) and a second flow channel section (10) extending into the valve (1) from the second end (7);
a bulb (11) suspended in said second flow channel section via at least one bridge (BR) connecting said bulb (11) to said housing (2), said second flow channel section passing radially outside of said bulb (11) except where said at least one bridge (BR) is located and said first flow channel section (9) extending axially from said first end (6) to said bulb (11);
an obturator sheath (12) suspended for guided axial movement between a closed position and an open position;
wherein the obturator sheath (12) in the closed position closes off at least one flow passage between the first flow channel section (9) radially inside the at least one flow passage and the second flow channel section (10) radially outward of the at least one flow passage, substantially blocking flow from the first flow channel section (9) to the second flow channel section (10) and vice versa;
wherein the obturator sheath (12) in the open position at least partially leaves open the flow passage between the first flow channel section (9) and the second flow channel section (10), allowing flow from the first flow channel section (9) to the second flow channel section (10) and vice versa;
an operating member (13) extending axially in the bulb (11) and connected to the obturator sheath (12), the operating member (13) having at least one engagement surface (18, 19) facing in axial direction (8);
a toggle member (20) pivotably mounted to the bulb (11) so as to be pivotable about a pivot axis (21) between a closing position causing the obturator sheath (12) to be in the closed position and an opening position causing the obturator sheath (12) to be in the open position, the toggle member (20) having at least one actuating surface (22, 23) in contact with the at least one engagement surface (18, 19) in a position in a plane spaced from the pivot axis (21) in a direction (25) perpendicular to the axial direction and to the pivot axis (21);
**characterized in that**,
the at least one actuating surface (22, 23) has at least first and second surface portions (22a, 23a; 22b, 23b) at mutually different distances from the pivot axis (21) and contiguous to each other, said first and second surface portions (22a, 23a; 22b, 23b) having mutually different radii of curvature about axes of curvature parallel to the pivot axis (21).

2. A valve according to claim 1,
wherein the toggle member (20) is in the form of an elongated crank arm pivotable about the pivot axis (21);
wherein the at least one actuating surface (22, 23) is located on the crank arm such that in longitudinal direction of said crank arm, the at least one actuating surface (22, 23) is located spaced from the pivot axis only (21);
wherein the at least one engagement surface (18, 19) is arranged to move along a path in said axial direction (8), contours of said path being defined by boundaries of said at least one engagement surface (18, 19); and
wherein, in said direction perpendicular to said axial direction (8) and to said pivot axis (21), said pivot axis (21) is located spaced from said path.

3. A valve according to claim 1 or 2, wherein the radii of curvature of the surface portions (22a, 23a; 22b, 23b) of the at least one actuating surface (22, 23) are dimensioned such that, at least in a range of angular rotation of the toggle member (20), a ratio between an angular rotation of the toggle and axial displacement of the obturator sheath (12) is more constant than if the actuating surface (22, 23) has a single radius of curvature about axes of curvature parallel to the pivot axis (21).

4. A valve according to any of the preceding claims, wherein said first surface portion (22a, 23a) is closer to the pivot axis (21) than said second surface portion (22b, 23b) and wherein the radius of curvature about an axis of curvature parallel to the pivot axis (21) of said first surface portion (22a, 23a) is smaller than the radius of curvature about an axis of curvature parallel to the pivot axis (21) of said second surface portion(22b, 23b).

5. A valve according to any of the preceding claims, wherein said radii of curvature of at least a sequence of said actuating surface portions (22a, 23a; 22b, 23b) increase continuously with increasing distance from the pivot axis (21).

6. A valve according to any of the preceding claims, wherein said radii of curvature of at least a sequence of said actuating surface portions (22a, 23a; 22b, 23b) are shaped as an involute of a circle of which the centre is intersected by the pivot axis (21).

7. A valve according to claim 5 or 6, wherein said radii of curvature of said actuating surface portions (22a, 23a; 22b, 23b) increase such that the actuating surface (22, 23) touches said at least one engagement surface (18, 19) in a substantially fixed contact position on said at least one engagement surface as said toggle member (20) is pivoted.

8. A valve according to claim 7, wherein said fixed contact position on said at least one engagement surface (18, 19) is intersected by a central axis (24) of said obturator sheath (12).

9. A valve according to any of the preceding claims, wherein said toggle member actuating surfaces (22, 23) are located on mutually opposite sides, said actuating surfaces (22, 23) each contacting an associated one of mutually opposite engagement surfaces (18, 19) facing each other.

10. A valve according to claims 2 and 9, wherein in each operative position of said toggle member (20), a section of said crank arm extends from said pivot axis (21) to said actuating surfaces (22, 23) to a space between said opposite engagement surfaces (18, 19).

11. A valve according to claim 9 or 10, wherein said actuating surfaces (22, 23) on mutually opposite sides of said toggle member (20) are shaped such that positions in which said actuating surfaces (22, 23) contact said engagement surfaces (18, 19) remain at a constant distance in said axial direction (8) if said toggle member is pivoted.

12. A valve according to any of the preceding claims, wherein said actuating surface (22, 23) is on a side of a body of said toggle member extending from said pivot axis.

13. A valve according to claim 12, wherein said toggle member (20) is integrally formed.

14. A valve according to claim 12 or 13, wherein said operating member (13) further has at least one chamfer (26, 27) surface contiguous with the or each engagement surface (18, 19).

15. A valve according to any of the preceding claims, wherein said at least one engagement surface (18, 19) is flat.

16. A valve according to any of the preceding claims, wherein said at least one engagement surface (18, 19) is perpendicular to said axial direction.

## Patentansprüche

1. Ventil zum Steuern eines Flüssigkeitsflusses, wobei das Ventil aufweist:
ein Gehäuse (2) mit einem Durchflusskanal (5), der sich durch das Gehäuse (2) von einem ersten Ende (6) in einer axialen Richtung (8) zu einem zweiten Ende (7) erstreckt, wobei der Durchflusskanal (5) einen ersten Durchflusskanalabschnitt (9) aufweist, der sich von dem ersten Ende (6) in das Ventil (1) erstreckt, und einen zweiten Durchflusskanalabschnitt (10), der sich von dem zweiten Ende (7) in das Ventil (1) erstreckt;
einen Kolben (11), der in dem zweiten Durchflusskanalabschnitt über wenigstens eine Brücke (BR) aufgehängt ist, die den Kolben (11) mit dem Gehäuse (2) verbindet, wobei der zweite Durchflusskanalabschnitt radial außerhalb des Kolbens (11) verläuft, mit Ausnahme der Stelle, an der sich die wenigstens eine Brücke (BR) befindet, und der erste Durchflusskanalabschnitt (9) sich axial von dem ersten Ende (6) zu dem Kolben (11) erstreckt;
eine Obturatorhülle (12), die für eine geführte axiale Bewegung zwischen einer geschlossenen Position und einer offenen Position aufgehängt ist;
wobei die Obturatorhülle (12) in der geschlossenen Position wenigstens einen Flussdurchlass zwischen dem ersten Durchflusskanalabschnitt (9) radial innerhalb des wenigstens einen Flussdurchlasses und dem zweiten Durchflusskanalabschnitt (10) radial außerhalb des wenigstens einen Flussdurchlasses verschließt, wodurch der Durchfluss von dem ersten Durchflusskanalabschnitt (9) zu dem zweiten Durchflusskanalabschnitt (10) und umgekehrt im Wesentlichen blockiert wird;
wobei die Obturatorhülle (12) in der offenen Position den Flussdurchlass zwischen dem ersten Durchflusskanalabschnitt (9) und dem zweiten Durchflusskanalabschnitt (10) wenigstens teilweise offen lässt, so dass ein Durchfluss von dem ersten Durchflusskanalabschnitt (9) zu dem zweiten Durchflusskanalabschnitt (10) und umgekehrt möglich ist;
ein Betätigungselement (13), das sich axial im Kolben (11) erstreckt und mit der Obturatorhülle (12) verbunden ist, wobei das Betätigungselement (13) wenigstens eine in axialer Richtung (8) weisende Eingriffsfläche (18, 19) aufweist;
ein Kippglied (20), das schwenkbar an dem Kolben (11) montiert ist, so dass es um eine Schwenkachse (21) zwischen einer Schließposition, die bewirkt, dass sich die Obturatorhülle (12) in der geschlossenen Position befindet, und einer Öffnungsposition, die bewirkt, dass sich die Obturatorhülle (12) in der offenen Position befindet, geschwenkt werden kann, wobei das Kippglied (20) wenigstens eine Betätigungsfläche (22, 23) aufweist, die in Kontakt mit der wenigstens einen Eingriffsfläche (18, 19) in einer Position in einer Ebene steht, die von der Schwenkachse (21) in einer Richtung (25) senkrecht zur axialen Richtung und zur Schwenkachse (21) beabstandet ist;
**dadurch gekennzeichnet, dass**,
die wenigstens eine Betätigungsfläche (22, 23) wenigstens einen ersten und einen zweiten Flächenabschnitt (22a, 23a; 22b, 23b) aufweist, die sich in unterschiedlichen Abständen von der Schwenkachse (21) befinden und aneinander angrenzen, wobei der erste und der zweite Flächenabschnitt (22a, 23a; 22b, 23b) unterschiedliche Krümmungsradien um Krümmungsachsen parallel zur Schwenkachse (21) aufweisen.

2. Ventil nach Anspruch 1,
wobei das Kippglied (20) die Form eines länglichen Kurbelarms hat, der um die Schwenkachse (21) geschwenkt werden kann;
wobei sich die wenigstens eine Betätigungsfläche (22, 23) auf dem Kurbelarm befindet, so dass in Längsrichtung des Kurbelarms die wenigstens eine Betätigungsfläche (22, 23) nur von der Schwenkachse (21) beabstandet ist;
wobei die wenigstens eine Eingriffsfläche (18, 19) so angeordnet ist, dass sie sich entlang einer Bahn in der axialen Richtung (8) bewegt, wobei die Konturen der Bahn durch die Grenzen der wenigstens einen Eingriffsfläche (18, 19) definiert sind; und
wobei sich die Schwenkachse (21) in der Richtung senkrecht zur axialen Richtung (8) und zur Schwenkachse (21) beabstandet von der Bahn befindet.

3. Ventil nach Anspruch 1 oder 2, wobei die Krümmungsradien der Flächenabschnitte (22a, 23a; 22b, 23b) der wenigstens einen Betätigungsfläche (22, 23) so dimensioniert sind, dass wenigstens in einem Bereich der Winkeldrehung des Kippglieds (20) ein Verhältnis zwischen einer Winkeldrehung des Kippglieds und einer axialen Verschiebung der Obturatorhülle (12) konstanter ist, als wenn die Betätigungsfläche (22, 23) einen einzigen Krümmungsradius um zur Schwenkachse (21) parallele Krümmungsachsen aufweist.

4. Ventil nach einem der vorhergehenden Ansprüche, wobei der erste Flächenabschnitt (22a, 23a) näher an der Schwenkachse (21) liegt als der zweite Flächenabschnitt (22b, 23b) und wobei der Krümmungsradius um eine Krümmungsachse parallel zur Schwenkachse (21) des ersten Flächenabschnitts (22a, 23a) kleiner ist als der Krümmungsradius um eine Krümmungsachse parallel zur Schwenkachse (21) des zweiten Flächenabschnitts (22b, 23b).

5. Ventil nach einem der vorhergehenden Ansprüche, wobei die Krümmungsradien wenigstens einer Folge der Betätigungsflächenabschnitte (22a, 23a; 22b, 23b) mit zunehmendem Abstand von der Schwenkachse (21) kontinuierlich zunehmen.

6. Ventil nach einem der vorhergehenden Ansprüche, wobei die Krümmungsradien wenigstens einer Folge der Betätigungsflächenabschnitte (22a, 23a; 22b, 23b) die Form einer Evolvente eines Kreises haben, dessen Mittelpunkt von der Schwenkachse (21) geschnitten wird.

7. Ventil nach Anspruch 5 oder 6, wobei die Krümmungsradien der Betätigungsflächenabschnitte (22a, 23a; 22b, 23b) so zunehmen, dass die Betätigungsfläche (22, 23) die wenigstens eine Eingriffsfläche (18, 19) in einer im Wesentlichen festen Kontaktposition auf der wenigstens einen Eingriffsfläche berührt, wenn das Kippglied (20) geschwenkt wird.

8. Ventil nach Anspruch 7, wobei die feste Kontaktposition auf der wenigstens einen Eingriffsfläche (18, 19) von einer zentralen Achse (24) der Obturatorhülle (12) geschnitten wird.

9. Ventil nach einem der vorhergehenden Ansprüche, wobei sich die Betätigungsflächen (22, 23) des Kippglieds auf einander gegenüberliegenden Seiten befinden, wobei die Betätigungsflächen (22, 23) jeweils eine zugeordnete der einander gegenüberliegenden Eingriffsflächen (18, 19) berühren, die einander gegenüberliegen.

10. Ventil nach einem der Ansprüche 2 und 9, wobei sich in jeder Betriebsstellung des Kippglieds (20) ein Abschnitt des Kurbelarms von der Schwenkachse (21) zu den Betätigungsflächen (22, 23) in einen Raum zwischen den gegenüberliegenden Eingriffsflächen (18, 19) erstreckt.

11. Ventil nach Anspruch 9 oder 10, wobei die Betätigungsflächen (22, 23) auf einander gegenüberliegenden Seiten des Kippglieds (20) so geformt sind, dass Positionen, in denen die Betätigungsflächen (22, 23) die Eingriffsflächen (18, 19) berühren, in der axialen Richtung (8) in einem konstanten Abstand bleiben, wenn das Kippglied geschwenkt wird.

12. Ventil nach einem der vorhergehenden Ansprüche, wobei sich die Betätigungsfläche (22, 23) auf einer Seite eines Körpers des Kippglieds befindet, die sich von der Schwenkachse aus erstreckt.

13. Ventil nach Anspruch 12, wobei das Kippglied (20) einstückig ausgebildet ist.

14. Ventil nach Anspruch 12 oder 13, wobei das Betätigungselement (13) ferner wenigstens eine abgeschrägte (26, 27) Fläche aufweist, die an die oder jede Eingriffsfläche (18, 19) angrenzt.

15. Ventil nach einem der vorhergehenden Ansprüche, wobei die wenigstens eine Eingriffsfläche (18, 19) flach ist.

16. Ventil nach einem der vorhergehenden Ansprüche, wobei die wenigstens eine Eingriffsfläche (18, 19) senkrecht zur axialen Richtung steht.

## Revendications

1. Vanne pour contrôler un écoulement de fluide, la vanne représentant :
un logement (2) avec un canal d'écoulement (5) s'étendant à travers le logement (2) à partir d'une première extrémité (6) dans une direction axiale (8) jusqu'à une seconde extrémité (7), le canal d'écoulement (5) présentant une première section de canal d'écoulement (9) s'étendant dans la vanne (1) à partir de la première extrémité (6) et une seconde section de canal d'écoulement (10) s'étendant dans la vanne (1) à partir de la seconde extrémité (7) ;
un bulbe (11) suspendu dans ladite seconde section de canal d'écoulement via au moins un pont (BR) connectant ledit bulbe (11) audit logement (2), ladite seconde section de canal d'écoulement passant radialement à l'extérieur dudit bulbe (11) à l'exception de l'endroit où ledit au moins un pont (BR) est disposé et ladite première section de canal d'écoulement (9) s'étendant axialement de ladite première extrémité (6) jusqu'audit bulbe (11) ;
une gaine d'obturateur (12) suspendue pour un mouvement axial guidé entre une position fermée et une position ouverte ;
dans laquelle la gaine d'obturateur (12) dans la position fermée ferme au moins un passage d'écoulement entre la première section de canal d'écoulement (9) radialement à l'intérieur du au moins un passage d'écoulement et la seconde section de canal d'écoulement (10) radialement vers l'extérieur du au moins un passage d'écoulement, bloquant substantiellement un écoulement de la première section de canal d'écoulement (9) jusqu'à la seconde section de canal d'écoulement (10) et vice versa ;
dans laquelle la gaine d'obturateur (12) dans la position ouverte laisse au moins partiellement ouvert le passage d'écoulement entre la première section de canal d'écoulement (9) et la seconde section de canal d'écoulement (10) permettant un écoulement de la première section de canal d'écoulement (9) jusqu'à la seconde section de canal d'écoulement (10) et vice versa ;
un élément de fonctionnement (13) s'étendant axialement dans le bulbe (11) et raccordé à la gaine d'obturateur (12), l'élément de fonctionnement (13) présentant au moins une surface d'engagement (18, 19) orientée dans une direction axiale (8) ;
un élément de bascule (20) monté en pouvant pivoter sur le bulbe (11) afin de pouvoir pivoter autour d'un axe de pivot (21) entre une position de fermeture occasionnant que la gaine d'obturateur (12) se trouve dans la position fermée et une position d'ouverture occasionnant que la gaine d'obturateur (12) se trouve dans la position ouverte, l'élément de bascule (20) présentant au moins une surface d'actionnement (22, 23) en contact avec la au moins une surface d'engagement (18, 19) dans une position dans un plan espacé de l'axe de pivot (21) dans une direction (25) perpendiculaire à la direction axiale et à l'axe de pivot (21) ;
**caractérisée en ce que**,
la au moins une surface d'actionnement (22, 23) présente au moins des première et seconde portions de surface (22a, 23a ; 22b, 23b) à des distances mutuellement différentes de l'axe de pivot (21) et contiguës les unes aux autres, lesdites première et seconde portions de surface (22a, 23a ; 22b, 23b) ayant des rayons de courbure mutuellement différents autour d'axes de courbure parallèles à l'axe de pivot (21).

2. Vanne selon la revendication 1,
dans laquelle l'élément de bascule (20) est dans la forme d'un bras de manivelle allongé pouvant pivoter autour de l'axe de pivot (21) ;
dans laquelle la au moins une surface d'actionnement (22, 23) est disposée sur le bras de manivelle de sorte que dans une direction longitudinale dudit bras de manivelle, la au moins une surface d'actionnement (22, 23) est disposée à distance de l'axe de pivot uniquement (21) ;
dans laquelle la au moins une surface d'engagement (18, 19) est disposée pour se déplacer le long d'une trajectoire dans ladite direction axiale (8), les contours de ladite trajectoire étant définis par des limites de ladite au moins une surface d'engagement (18, 19) ; et
dans laquelle, dans ladite direction perpendiculaire à ladite direction axiale (8) et audit axe de pivot (21), ledit axe de pivot (21) est disposé à distance de ladite trajectoire.

3. Vanne selon la revendication 1 ou 2, dans laquelle les rayons de courbure des portions de surface (22a, 23a ; 22b, 23b) de la au moins une surface d'actionnement (22, 23) sont dimensionnés de sorte que, au moins dans un intervalle de rotation angulaire de l'élément de bascule (20), un rapport entre une rotation angulaire de la bascule et un déplacement axial de la gaine d'obturateur (12) est plus constant que si la surface d'actionnement (22, 23) présente un unique rayon de courbure autour d'axes de courbure parallèles à l'axe de pivot (21).

4. Vanne selon l'une quelconque des revendications précédentes, dans laquelle ladite première portion de surface (22a, 23a) est plus proche de l'axe de pivot (21) que ladite seconde portion de surface (22b, 23b) et dans laquelle le rayon de courbure autour d'un axe de courbure parallèle à l'axe de pivot (21) de ladite première portion de surface (22a, 23a) est inférieur au rayon de courbure autour d'un axe de courbure parallèle à l'axe de pivot (21) de ladite seconde portion de surface (22b, 23b).

5. Vanne selon l'une quelconque des revendications précédentes, dans laquelle lesdits rayons de courbure d'au moins une série desdites portions de surface d'actionnement (22a, 23a ; 22b, 23b) augmentent en continu avec la distance croissante à partir de l'axe de pivot (21).

6. Vanne selon l'une quelconque des revendications précédentes, dans laquelle lesdits rayons de courbure d'au moins une série desdites portions de surface d'actionnement (22a, 23a ; 22b, 23b) sont façonnés comme une courbe développante d'un cercle dont le centre est coupé par l'axe de pivot (21).

7. Vanne selon la revendication 5 ou 6, dans laquelle lesdits rayons de courbure desdites portions de surface d'actionnement (22a, 23a ; 22b, 23b) augmentent de sorte que la surface d'actionnement (22, 23) touche ladite au moins une surface d'engagement (18, 19) dans une position de contact substantiellement fixée sur ladite au moins une surface d'engagement lorsque ledit élément de bascule (20) pivote.

8. Vanne selon la revendication 7, dans laquelle ladite position de contact fixée sur ladite au moins une surface d'engagement (18, 19) est coupée par un axe central (24) de ladite gaine d'obturateur (12).

9. Vanne selon l'une quelconque des revendications précédentes, dans laquelle lesdites surfaces d'actionnement d'élément de bascule (22, 23) sont disposées sur des côtés mutuellement opposés, lesdites surfaces d'actionnement (22, 23) étant chacune en contact avec une associée de surfaces d'engagement mutuellement opposées (18, 19) se faisant face l'une l'autre.

10. Vanne selon les revendications 2 et 9, dans laquelle dans chaque position de fonctionnement dudit élément de bascule (20), une section dudit bras de manivelle s'étend dudit axe de pivot (21) jusqu'audites surfaces d'actionnement (22, 23) jusqu'à un espace entre lesdites surfaces d'engagement opposées (18, 19).

11. Vanne selon la revendication 9 ou 10, dans laquelle lesdites surfaces d'actionnement (22, 23) sur des côtés mutuellement opposés dudit élément de bascule (20) sont façonnées de sorte que des positions dans lesquelles lesdites surfaces d'actionnement (22, 23) sont en contact avec lesdites surfaces d'engagement (18, 19) restent à une distance constante dans ladite direction axiale (8) si ledit élément de bascule pivote.

12. Vanne selon l'une quelconque des revendications précédentes, dans laquelle ladite surface d'actionnement (22, 23) se trouve sur un côté d'un corps dudit élément de bascule s'étendant à partir dudit axe de pivot.

13. Vanne selon la revendication 12, dans laquelle ledit élément de bascule (20) est formé d'une pièce.

14. Vanne selon la revendication 12 ou 13, dans laquelle ledit élément de fonctionnement (13) présente de plus au moins une surface de chanfrein (26, 27) contiguë avec la ou chaque surface d'engagement (18, 19).

15. Vanne selon l'une quelconque des revendications précédentes, dans laquelle ladite au moins une surface d'engagement (18, 19) est plate.

16. Vanne selon l'une quelconque des revendications précédentes, dans laquelle ladite au moins une surface d'engagement (18, 19) est perpendiculaire à ladite direction axiale.
